# EUROPÄISCHE PATENTANMELDUNG

(11) **EP 0 945 342 A1**
(43) Veröffentlichungstag der Anmeldung: **29.09.1999**
(21) Anmeldenummer: 98105616.1
(22) Anmeldetag: 27.03.1998
(51) Int. Cl.: B64D 17/62

(54) **Verfahren zum Öffnen eines Rettungsfallschirms und Fallschirmsystem mit einem verfahrensgemäss betätigten Fallschirm**

(71) Anmelder: Frick Aerotech AG, 9490 Vaduz (LI)
(72) Erfinder: Frick, Alexander, 8874 Mühlehorn (CH)
(74) Vertreter: Troesch Scheidegger Werner AG

(57) **Zusammenfassung**

Das Verfahren zum raschen Öffnen eines Rettungsfallschirms besteht darin, spätestens am Ende der Wegschiessstrecke den Schirm (1) ruckartig in Richtung des gebremst zu landenden Gegenstandes zurückzuziehen, wodurch sich der Schirm sofort öffnet. Dieses Vorgehen erlaubt die Verwendung solcher Fallschirme auch in Bodennähe.

## Beschreibung

Die vorliegende Erfindung betrifft ein Verfahren zum Betätigen und Öffnen eines gegebenenfalls mit einer Spreizmechanik versehenen Fallschirms, bei welchem ein geschlossener, über eine Verbindungsleine mit einem gegebenenfalls zur gebremsten Landung zu bringenden Gegenstand verbundener Fallschirm vom Gegenstand weggeschossen und die Spreizung des Schirms eingeleitet wird, sowie ein verfahrensgemäss betätigtes Fallschirmsystem.

Rettungsschirme werden seit langem bei Fluggeräten eingesetzt, sei dies zum Retten des Piloten oder des Fluggerätes selbst.

Die richtig dimensionierten Fallschirme erfüllen bei ordnungsgemässem Funktionieren die gestellte Aufgabe, vorausgesetzt, der zu rettende Gegenstand befindet sich in ausreichendem Abstand über dem Boden. Der Grund hierfür liegt darin, dass jeder Fallschirm eine gewisse Zeit benötigt, um sich zu öffnen und damit die angestrebte Wirkung zu entfalten.

Die Öffnung eines Fallschirms kann durch teilweise recht komplizierte Spreizmechanismen beschleunigt werden. Es hat sich jedoch gezeigt, dass solche Vorkehren noch nicht ausreichen, um eine sehr rasche Öffnung zu bewirken, so dass die Wirkung in Bodennähe immer noch unmöglich bzw. zumindest fragwürdig ist.

Aufgabe der vorliegenden Erfindung war es, ein Verfahren zu schaffen, welches eine ausserordentlich rasche Betätigung und Öffnung des Fallschirms erlaubt.

Diese Aufgabe wurde bei einem Verfahren der eingangs definierten Art erfindungsgemäss durch die Merkmale der Ansprüche 1 und 5 gelöst.

Besondere Ausführungsformen der Erfindung sind in den abhängigen Ansprüche definiert.

Die Erfindung basiert auf der Erkenntnis, dass ein rasches Öffnen eines Fallschirms dann erfolgt, wenn dieser mit einer ruckartigen Bewegung bzw. Kraft "zurückgezogen" wird.

Bei heutigen Rettungssystemen werden die Fallschirme weggeschossen. Zur Realisierung des Erfindungsgedankens musste deshalb entgegen der Wegschiessrichtung auf den Schirm eingewirkt werden, und dies möglichst schon, bevor die Verbindungsleine vollständig "ausgezogen" ist.

Die Erfindung wird nachstehend anhand von in der Zeichnung rein schematisch dargestellten Realisierungsformen noch etwas näher erläutert.

Es zeigt:
- Fig. 1: eine erste Ausführungsform eines Fallschirmsystems mit fester Verbindungsleine,
- Fig. 2: eine ähnliche Darstellung wie Fig. 1, mit gummielastischer Verbindungsleine und
- Fig. 3: eine weitere Ausführungsform, mit Hilfsleine.

Bei sämtlichen in der Zeichnung schematisch dargestellten Fallschirmsystemen geht es darum, im Notfall bzw. Bedarfsfall den geschlossenen bzw. verpackten Fallschirm 1 vom zu einer gebremsten Landung zu bringenden Gegenstand 2, z.B. einem Fluggerät, Schleudersitz etc., wegzuschiessen (mittels Treibladung, Rakete). Der Fallschirm 1 ist über eine Verbindungsleine 3 mit dem Gegenstand 2 verbunden.

Wie bereits weiter oben erwähnt, geht es darum, den weggeschossenen Fallschirm 1 spätestens am Ende der Verbindungsleine ruckartig wieder in Richtung des Gegenstandes 2 zurückzuziehen, damit sich der Fallschirm 1 rasch öffnet.

Das Wegschiessen und ruckartige Zurückziehen und damit Öffnen des Schirms geht sehr rasch vor sich (Sekundenbereich), so dass sich der Rettungsfallschirm auch für den Gebrauch in Bodennähe eignet.

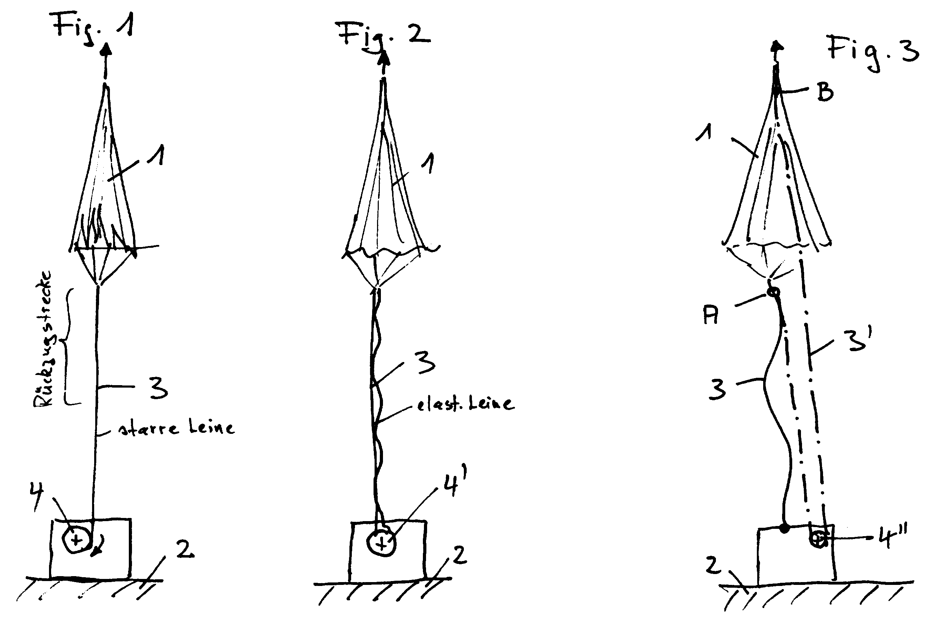

Bei der Ausführungsform nach Fig. 1 ist die Verbindungsleine 3 auf Seite des Gegenstandes 2 mit einer motorischen Aufspulvorrichtung 4 verbunden, welche nach vollständigem Ausfahren der Leine 3 diese unverzüglich automatisch zurückzieht (Rückspulung z.B. durch Federmotor, welcher durch Ruck am Ende der Leine ausgelöst wird). Durch das ruckartige Zurückziehen wird der Fallschirm sofort geöffnet (Zehntelssekunden).

Bei der Ausführungsform nach Fig. 2 besteht die Verbindungsleine 3 aus einem gummielastischen Material. Die Leine wird gespannt, und am Ende des Spannweges wird sie die gespeicherte Energie zum Rückzug des Fallschirms 1 einsetzen. Die nach dem Rückzug lose Leine 3 wird vorzugsweise durch einen Aufspulmechanismus 4' teilweise aufgespult, damit die Wirkung des Fallschirms 1 sofort eintreten kann.

Bei der Ausführungsform nach Fig. 3 schliesslich ist neben der Verbindungsleine 3 eine Hilfsleine 3' vorgesehen. Diese ist z.B. an den Punkten A und B am Schirm 1 befestigt und am Gegenstand 2 über eine Umlenkrolle 4'' geführt.

Gegen Ende der Wegschiessstrecke wird die Hilfsleine 3' am Punkt A in Richtung vom Gegenstand weg mitgezogen und wird damit am Punkt B angreifend den Schirm 1 ruckartig zurückziehen und dessen rasche Öffnung bewirken.

Ob anfänglich die Verbindung zwischen Fallschirm 1 und Gegenstand 2 über die Leine 3 oder die Hilfsleine 3' erfolgt, ist belanglos.

## Patentansprüche

1. Verfahren zum Betätigen und Öffnen eines gegebenenfalls mit einer Spreizmechanik versehenen Fallschirms, bei welchem ein geschlossener, über eine Verbindungsleine mit einem gegebenenfalls zur gebremsten Landung zu bringenden Gegenstand verbundener Fallschirm vom Gegenstand weggeschossen und die Spreizung des Schirms eingeleitet wird, dadurch gekennzeichnet, dass der weggeschossene, noch nicht vollständig geöffnete Fallschirm spätestens bei Erreichen des wegen der Verbindungsleine maximal erreichbaren Abstandes vom Gegenstand durch äussere Krafteinwirkung möglichst ruckartig wieder um eine vorbestimmte Strecke in Richtung des Gegenstandes zurückgezogen wird, um dadurch die Öffnung des Schirms zu beschleunigen.

2. Verfahren nach Anspruch 1, dadurch gekennzeichnet, dass zum Zurückziehen des weggeschossenen Fallschirmes die Elastizität einer gummielastischen Verbindungsleine ausgenutzt wird.

3. Verfahren nach Anspruch 1, dadurch gekennzeichnet, dass der weggeschossene Fallschirm durch motorischen Rückzug der Verbindungsleine, z.B. mittels eines Federmotors, geöffnet wird.

4. Verfahren nach Anspruch 1, dadurch gekennzeichnet, dass zum Rückzug des weggeschossenen Fallschirms die Wegschiessenergie im letzten Abschnitt des Wegschiessweges benutzt wird, indem eine über eine Umlenkrolle am zur Landung zu bringenden Gegenstand geführte Hilfsleine den Fallschirm zurückzieht.

5. Rettungsfallschirmsystem mit Fallschirm und Verbindungsleine, mit einem nach dem Verfahren nach einem der Ansprüche 1 bis 4 zu öffnenden Fallschirm, dadurch gekennzeichnet, dass Mittel vorgesehen sind, um im Notfall den Fallschirm von dem zur gebremsten Landung zu bringenden Gegenstand wegzuschiessen, und dass eine Einrichtung vorgesehen ist, um den Fallschirm spätestens bei Erreichen der maximalen Distanz vom Gegenstand ruckartig zurückzuziehen und damit die Öffnung des Schirms zu beschleunigen.

6. Fallschirmsystem nach Anspruch 5, dadurch gekennzeichnet, dass die Rückzugseinrichtung durch eine elastische, insbesondere gummielastische Verbindungsleine gebildet ist, wobei vorzugsweise Mittel vorgesehen sind, um die Leine nach Öffnung des Schirme teilweise aufzuspulen.

7. Fallschirmsystem nach Anspruch 5, dadurch gekennzeichnet, dass die Rückzugseinrichtung eine motorisch betriebene Aufspulvorrichtung für die Verbindungsleine umfasst.

8. Fallschirmsystem nach Anspruch 5, dadurch gekennzeichnet, dass neben der Verbindungsleine eine Hilfsleine vorgesehen ist, welche den Fallschirm unter Ausnutzung der Rest-Wegschiessenergie zurückzieht.
